# EUROPEAN PATENT APPLICATION

(11) **EP 1 826 036 A1**
(43) Date of publication of application: **29.08.2007**
(21) Application number: 07002859.2
(22) Date of filing: 09.02.2007
(51) Int. Cl.: B60G 17/017, B60G 17/04, B62D 5/07, B62D 33/08, B66F 9/22

(54) **On-board auxiliary hydraulic system**

(30) Priority: 28.02.2006 US 777642 P
(71) Applicant: Actuant Corporation, Glendale WI 53209 (US)
(72) Inventor: Bakshi, Nikesh, Granger, Indiana 46530 (US); Wen, Victor, Mishawaka, Indiana 46545 (US)
(74) Representative: Strobel, Wolfgang

(57) **Abstract**

An auxiliary hydraulic system for a vehicle is operable to actuate one or more auxiliary hydraulic devices on board the vehicle that are only operable when the vehicle is not in transit. The vehicle has an engine that is engageable with wheels of the vehicle to propel the vehicle and a hydraulic power steering pump that is driven by the engine and supplies fluid under pressure to a power steering system of the vehicle when the vehicle is in transit. The power steering pump provides a source of hydraulic fluid under pressure to power the auxiliary hydraulic system only when the vehicle is parked.

## Description

### CROSS-REFERENCE TO RELATED APPLICATION

Not applicable.

### STATEMENT CONCERNING FEDERALLY SPONSORED RESEARCH OR DEVELOPMENT

Not applicable.

### FIELD OF THE INVENTION

This invention relates to vehicle mounted auxiliary hydraulic systems like hydraulic powered jacks, extendible legs and slide-outs that use the vehicle engine driven hydraulic pump that is normally used for power steering or power brakes of the vehicle to drive the auxiliary hydraulic systems.

### BACKGROUND OF THE INVENTION

A common method to actuate hydraulic devices in RVs (recreational vehicles) and trucks is to provide a hydraulic power unit consisting of an electric motor, pump, reservoir and manifold with appropriate switching and valving mechanisms. A power unit, such as the one described above, is used in RVs to actuate leveling legs slide-outs or other on-board auxiliary hydraulic systems. A similar power unit is used for actuating legs on a semi-trailer. These are auxiliary, because they are systems that are not part of the vehicle that are engine powered and used during over the road travel of the vehicle, like the power brakes and power steering.

### SUMMARY OF THE INVENTION

A new design of hydraulic system, harnesses the oil pressure generated by on-board hydraulic pump in an engine to actuate the legs/slides (auxiliary hydraulic devices). Vehicle engines have hydraulic pumps that are used to drive power steering, cooling fans etc.

When the vehicle engine is running, but the vehicle is parked, the oil pressure being generated by the on-board pump is not needed. This system uses the oil pressure and diverts the flow to actuate auxiliary hydraulic devices. In RV applications to actuate room slides, leveling legs, step-slides, generator slides, etc., this saves the cost of a pump, weight of the pump, reduced mounting time, and reduced electrical power harnesses. In class-8 trucks, this device can be mounted on the truck and the semi-trailer will have the legs actuated by the power steering pump. Through quick-connects for hydraulic and electrical lines, the semi- trailer can be actuated from the truck engine pump. The invention could also be applied to other vehicles, such as a dump truck lift, or a trash truck lift.

In one aspect, the system gets electronic signals from the vehicle for the parking brake 'engaged' and gear in 'neutral/park', and only then diverts the flow from the on-board hydraulic pump for use in auxiliary hydraulic devices.

In another aspect, the return line of the new system goes through a separate oil filter at low pressure, for cleaning out any impurities, before returning oil to the vehicle engine driven pump system.

In another aspect, the flow rate of the on-board pump may be high, for example up to 10 g.p.m., and the new system manifold uses a set of regulating valves to control the speed of actuation and desired pressure into the auxiliary hydraulic devices to accommodate such a system.

The foregoing and other objects and advantages of the invention will appear in the detailed description which follows. In the description, reference is made to the accompanying drawings which illustrate a preferred embodiment of the invention.

### BRIEF DESCRIPTION OF THE DRAWINGS

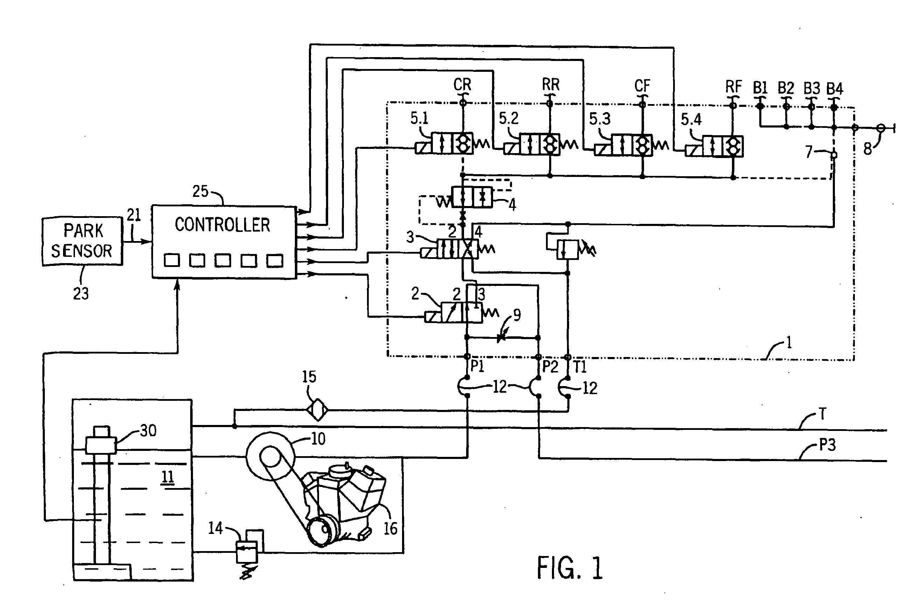

Fig. 1 is an electro-hydraulic schematic of an on-board vehicle hydraulic system of the invention.

### DETAILED DESCRIPTION OF THE PREFERRED EMBODIMENT

Referring to Fig. 1, components of a preferred embodiment of an on-board hydraulic system of the invention are the vehicle engine driven power steering pump 10, typically driven by a belt from the crankshaft pulley of the engine, a reservoir 11 and a pressure relief valve 14. Most on-board systems have an oil-filter 15, sometimes in the return line as illustrated and sometimes inside the reservoir. 'P' represents a hydraulic line, which could be a hose, under pressure, and 'T' represents, the low-pressure return line going into the reservoir 11. The pump 10 provides fluid under pressure to the power steering system (not shown except for line P3 of the vehicle in usual fashion when the vehicle is in transit.

The new system consists of an auxiliary hydraulic system including a hydraulic manifold 1, the hydraulic circuit of which is shown in Fig. 1. Parts not shown are hoses, fittings, hydraulic cylinders, for example of an RV slide-out system (reference U.S. Patent No. 5,758,918 which is hereby incorporated by reference for its disclosure in Figs. 13 and 14 and the accompanying description of a hydraulic slide-out system) or of a leveling system (reference U.S. Patent No. 5,312,119, which is hereby incorporated by reference for its disclosure of a hydraulically operated leveling system) that need to be actuated and an electrical harness.

CR, RR, CF and RF represent the pressure side of cylinders that need to be actuated. There can be fewer or more cylinders actuated using this technique depending upon the need. Valves 5.1, 5.2, 5.3 and 5.4 are directional valves that direct flow to the cylinders. B1, B2, B3 and B4 are return lines from the cylinders.

Directional valve 2 determines whether the oil under pressure goes to auxiliary hydraulic devices or continues to flow to the regular power steering circuit, which is supplied by line P3.

Directional valve 3 determines whether the auxiliary hydraulic cylinders extend or retract. Flow regulator 4 restricts the flow depending upon need. Relief valve 6 limits the speed at which the cylinders retract. Pilot operated check valve (POCV) 7 holds the cylinders in extend position. A return line oil filter 15 cleans the oil before being dumped into the reservoir. Reference numeral 12 represents flexible hoses and fittings to connect to the manifold. An optional needle valve 9 or an orifice can be provided to bypass the excessive pump flow to line P3.

In the normal condition, the vehicle is moving (in transit) and the auxiliary hydraulic circuit is not activated when valve 2 is not energized. In this condition, hydraulic fluid under pressure bypasses the manifold and flows directly to line P3, which operates normally to energize power steering or other hydraulic systems that are operated while the vehicle is in transit.

When the vehicle is parked, and with the engine running, the auxiliary hydraulic system can be activated. If the vehicle has a manual transmission, the transmission is shifted into neutral and the parking brake is applied. If it has an automatic transmission, the transmission is placed in "Park" and the parking brake may or may not be applied. All of these conditions can be sensed with simple electrical sensors or switches, and typical vehicles are already provided with such sensors, such that an electrical input 21 indicating whether the vehicle is parked can easily be generated. In Fig. 1, the park sensor 23 may be the parking brake sensor alone, or in combination with the neutral sensor in a manual transmission, or may be the "park" sensor in an automatic transmission, either alone or in combination with the parking brake sensor. When the controller 25 senses that the vehicle is parked, the controller 25 enables valve 2 to be energized by the operator of the auxiliary hydraulic system so as to activate the auxiliary system. Controller 25 can be provided with operator input buttons 27 or other operator inputs to allow operating the system.

During extending of the hydraulic cylinders, valve numbers 2, 3, 5.1, 5.2, 5.3 and 5.4 are energized and oil goes into the cap or bore ends of the cylinders and they extend. The extend speed can be regulated by valve 4. The excess capacity of the pump 10 bypasses to the reservoir using by-pass valves 9 and 14.

To retract, valves 2, 5.1, 5.2, 5.3 and 5.4 are energized. Oil under pressure comes from the pump 10 and goes through valve 7 to the rod ends of the hydraulic cylinders. Cylinders start retracting and oil from the cap or bore ends of the cylinders is pushed through the valves 5.1, 5.2, 5.3, 5.4 and valves 3, 4 and filter 15 and returns to reservoir 11. Valve 4 controls the speed of retract and valve 6 regulates the pressure applied to the cylinders.

A preferred embodiment of the invention has been described in considerable detail. Many modifications and variations to the preferred embodiment described will be apparent to a person of ordinary skill in the art. Therefore, the invention should not be limited to the embodiment described.

## Claims

1. In an auxiliary hydraulic system for a vehicle that is operable to actuate one or more auxiliary hydraulic devices on board the vehicle that are only operable when the vehicle is not in transit, the vehicle having an engine that is engageable with wheels of the vehicle to propel the vehicle and a hydraulic power steering pump that is driven by the engine and supplies fluid under pressure to a power steering system of the vehicle when the vehicle is in transit, the improvement wherein the power steering pump provides a source of hydraulic fluid under pressure to power the auxiliary hydraulic system and is operable to power said system only when the vehicle is parked.

2. The improvement of claim 1, wherein the system senses whether the vehicle is parked by determining if it is in neutral with the parking brake on.

3. The improvement of claim 1, wherein the vehicle has an automatic transmission and the system senses whether the vehicle is parked by determining if the transmission is in park.

4. The improvement of claim 1, wherein the system is a vehicle leveling system.

5. The improvement of claim 1, wherein the system is a slide-out system.

6. The improvement of claim 1, wherein the vehicle is a recreational vehicle.

7. The improvement of claim 1, wherein when the vehicle is parked the power steering pump does not provide fluid under pressure to the power steering system unless there is excessive flow from the pump that is not needed by the auxiliary hydraulic system.

8. The improvement of claim 1, wherein the auxiliary hydraulic system has a return line that is separate from a return line of the power steering system.
